# EUROPEAN PATENT APPLICATION

(11) **EP 1 416 252 A2**
(43) Date of publication of application: **06.05.2004**
(21) Application number: 03024986.6
(22) Date of filing: 30.10.2003
(51) Int. Cl.: G01C 21/36

(54) **Display of the recommended route in a navigation device**

(30) Priority: 01.11.2002 JP 2002319710
(71) Applicant: MATSUSHITA ELECTRIC INDUSTRIAL CO., LTD., Kadoma-shi, Osaka 571-8501 (JP)
(72) Inventor: Takahashi, Takeshi, Fukuoka-shi Fukuoka-ken 819-0046 (JP); Obuchi, Tetsuyuki, Dazaifu-shi Fukuoka-ken 818-0138 (JP)
(74) Representative: Gassner, Wolfgang

(57) **Abstract**

In a navigation device, a route searching section (101) derives a recommended route from a starting point to a destination point. A locating section (102) periodically derives a current position of a mobile unit. An orientation determining section (104) calculates an orientation of a map to be displayed from a plurality of selected points. A rendering section (105) generates a map image having overlaid thereon a recommended route in a RAM (9) in accordance with the map orientation determined by the orientation determining section (104). The map image generated in the above-described manner is displayed on the screen of a display unit (3), wherein a point identified by average coordinate values is located directly above the current position of the mobile unit.

## Description

### BACKGROUND OF THE INVENTION

### Field of the Invention

The present invention relates to navigation devices and, more specifically, to a navigation device that displays a recommended route from a starting point to a destination point.

### Description of the Background Art

In general, a navigation device is mounted on a mobile unit, such as a vehicle, automatically searching for a recommended route from a starting point to a destination point. The navigation device further obtains the direction of travel of the mobile unit, and then determines the obtained direction of travel as a map orientation. Furthermore, based on the found recommended route and the detorminedmap orientation, the navigation device generates a map to be displayed. Specifically, the navigation device generates a map so that the direction of travel of the mobile unit is perpendicular to the upper side of a display screen and the recommended route is overlaid on the map. The navigation device then causes such a map to be displayed on a display unit included in the navigation device. Here, a function of displaying a map so that the direction of travel is perpendicular to the upper side of the display screen is known as heading-up.

However, the above-described heading-up function has a problem such that the map orientation frequently changes while the mobile unit is traveling a road whose orientation changes frequently, such as a winding road or a loop-shaped road. As a result, the navigation device disadvantageously provides the user with a map frequently rotating a little with time. Such a map might be very difficult for the user to visually recognize. In order to suppress such rotation, Japanese Patent Laid-Open Publication No. 11-2530 (1999-2530) discloses a navigation device which does not change the map orientation when a cornering angle of the mobile unit is equal to or less than a predetermined cornering threshold.

However, the conventional navigation devices cannot fully mitigate the problem of providing the user with a recommended route which is difficult to visually recognize when the mobile unit is traveling a road whose orientation changes frequently or sharply. More specifically, consider a case in which the mobile unit is about to enter a sharp curve going right or left. In this case, the conventional navigation device causes a map image to be displayed so that the current direction of travel is perpendicular to the upper side of the screen. Therefore, the recommended route is displayed so as to be oriented toward the right or left side of the screen. In general, however, a user's line of sight is directed approximately to the center of an upper region of the screen. Therefore, the user might feel uncomfortable when viewing the recommended route oriented toward the right or left side of the screen. Here, although descriptions have been made by taking a sharp curve as an example, the above problem occurs not only to such a curve but also to any road whose orientation changes frequently.

### SUMMARY OF THE INVENTION

Therefore, an object of the present invention is to provide a navigation device that can offer users a recommended route that is easy to visually recognize.

In order to attain the object mentioned above, a first aspect of the present invention is directed to a navigation device which displays a recommended route from a starting point to a destination point of a mobile unit. The navigation device includes: a route searching section for deriving the recommended route: a locating section for deriving a current position of the mobile unit; an orientation determining section for selecting, on the recommended route, a plurality of points from a segment starting from the current position derived by the locating section and ending at a point which is a predetermined distance away from the current position, and determining, by using the selected points, a vector which determines a display orientation of the recommended route; a rendering section for generating a map image having overlaid thereon the recommended route in accordance with the display orientation determined by the orientation determining section; and a display section for displaying a map image generated by the rendering section on a screen included in the display section.

In one specific example, the orientation determining section calculates an end point defining the display orientation vector by using the selected points, and then determines an orientation starting from the current position derived by the locating section toward the calculated end point as the display orientation of the recommended route. By way of example, the orientation determining section calculates average coordinate values of the selected points as identifying the end point defining the display orientation vector. Alternatively, the orientation determining section calculates a barycenter of the recommended route from coordinate values of the selected points as the end point defining the display orientation vector.

In another specific example, the orientation determining section approximates the recommended route to a straight line by using coordinate values of the selected points, and then determines an orientation of the straight line as the display orientation.

Also, by way of example, the rendering section generates a map image in which the display orientation determined by the orientation determining section is toward an upper side of the screen included in the display section.

Furthermore, specifically, the predetermined distance is determined based on a scale of the map image.

Still further, preferably, if an intersection is located between the current position derived by the locating section and the point which is the predetermined distance away from the current point, the orientation determining section selects, on the recommended route, a plurality of points from a segment starting from the current point and ending at the intersection.

Still further, preferably, spaces between any adjacent two of the points selected by the orientation determining section are equal to each other.

Still further, the navigation device preferably includes a current position judging section for judging whether the mobile unit is not located on the recommended route. Here, upon judgment made by the current position judging section that the mobile unit is located on the recommended route , the orientation determining section determines a direction of travel of the mobile unit as the display orientation.

A second aspect of the present invention is directed to a method of displaying a recommended route from a starting point to a destination point of a mobile unit. The method includes: a route searching step of deriving the recommended route; a locating step of deriving a current position of the mobile unit; an orientation determining step of selecting, on the recommendedroute, a plurality of points from a segment starting from the current position derived in the locating step and ending at a point which is a predetermined distance away from the current point, and determining, by using the selected points, a vector which determines a display orientation of the recommended route; a rendering step of generating a map image having overlaid thereon the recommended route in accordance with the display orientation determined in the orientation determining step; and a displaying step of displaying the map image generated In the rendering step on a screen.

A third aspect of the present invention is directed to a computer program for generating a map image having overlaid thereon a recommended route from a starting point to a destination point of a mobile unit, the computer program causing a computer to execute: a route searching step of deriving the recommended route; a locating step of deriving a current position of the mobile unit; an orientation determining step of selecting, on the recommended route, a plurality of points from a segment starting from the current position derived in the locating step and ending at a point which is a predetermined distance away from the current point, and determining, by using the selected points, a vector which determines a display orientation of the recommended route; and a rendering step of generating a map image having overlaid thereon the recommended route in accordance with the display orientation determined in the orientation determining step. By way of example, the computer program is recorded on a recording medium.

According to the first through third aspects, with the use of the points selected from the recommended route, the display orientation of the recommended route with respect to the screen included in the display unit is determined. Thus. the recommended route can be displayed on the screen so as to be easy for the user to visually recognize.

Also, an image is generated in which the display orientation is toward the upper side of the screen. With this, the recommended route is displayed so as to be oriented from the current position toward an upper region of the screen. With this, the recommended route can be displayed on the screen so as to be easier for the user to visually recognize.

Furthermore, the predetermined distance is determined based on the scale of the map image. With this, a segment to be displayed of the recommended route can be changed in accordance with the scale. Thus , it is possible to provide a map image having overlaid thereon a recommended route that is easier for the user to visually recognize.

Still further, a plurality of points are selected on the recommended route from a segment starting from the current position and ending at an intersection. With this, the segment ending at the intersection, which is important for navigation, can be provided to the user so as to be easy to visually recognize.

Still further, spaces between any adjacent two of the points selected by the orientation determining section are equal to each other. With such balanced points being selected from the recommended route, a more preferable display orientation can be determined.

Still further, upon judgment that the mobile unit is not located on the recommended route, the direction of travel of the mobile unit is determined as the display orientation. With this, a separate determination regarding the display orientation is not required if unnecessary. Consequently, it is possible to efficiently display a map image.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a block diagram illustrating a hardware structure of a navigation device according to an embodiment of the present invention;
FIG. 2 is a block diagram illustrating main functions of the navigation device illustrated in FIG. 1;
FIG. 3 is a flowchart showing the operation of the navigation device illustrated in FIG. 1;
FIG. 4A is a schematic illustration showing a recommended route R displayed in step S11 of FIG. 3;
FIG. 4B is a schematic illustration showing the recommended route R displayed in step S9 of FIG. 3;
FIG. 5A is a first schematic illustration for describing technical effects in step S6 of FIG. 3; and
FIG. 5B is a second schematic illustration for describing the technical effects in step S6 of FIG. 3.

### DESCRIPTION OF THE PREFERRED EMBODIMENT

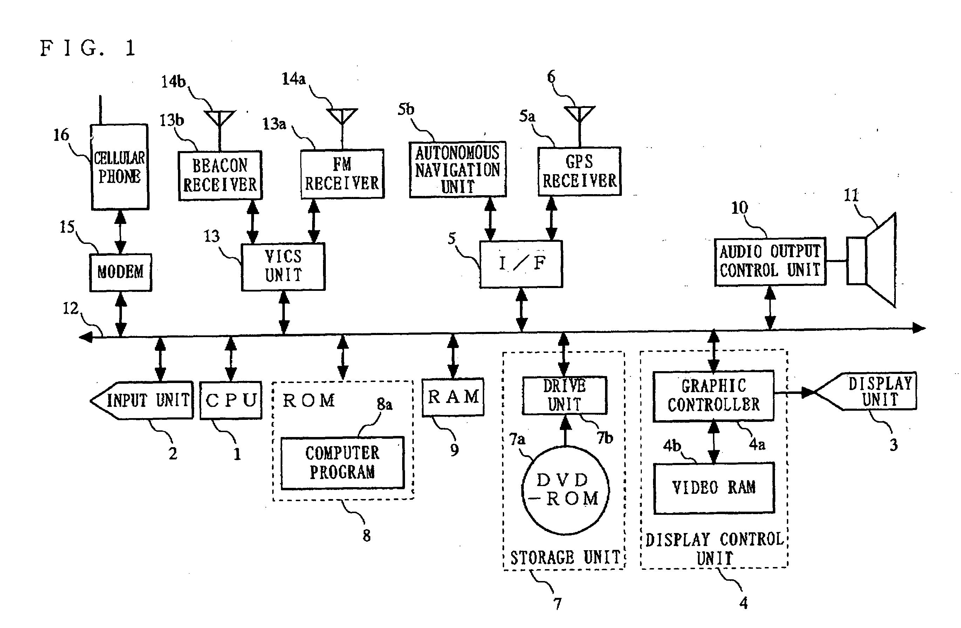

FIG. 1 is a block diagram illustrating a hardware structure of a navigation device according to an embodiment of the present invention. In FIG. 1. the navigation device is mounted on a mobile unit, including a CPU 1. an input unit 2, a display unit 3, a display control unit 4, an interface (denoted in FIG. 1 as I/F) **5,** a GPS receiver 5a, an autonomous navigation unit 5b, a first antenna 6, a storage unit 7, a ROM 8, a RAM 9, an audio output control unit 10, a loudspeaker 11, a bus line 12, a VICS unit 13, an FM receiver 13a, a beacon receiver 13b, a second antenna 14a, a third antenna 14b, and a modem 15.

The CPU 1 controls the operation of each component of the navigation device.

The input unit 2 is utilized by a user for data inputs to the navigation device. An example of the input unit 2 is a remote controller.

The display unit 3 mainly displays a map image on a screen included therein.

The display control unit 4 includes a graphic controller 4a and a video RAM 4b. The graphic controller 4a controls an image display process performed by the display unit 3. The video RAM 4b is a memory having two or more channels so that the graphic controller 4a can render a map image and transfer the map image to the display unit 3.

The interface 5 has connected thereto the GPS receiver 5a and the autonomous navigation unit 5b. The GPS receiver 5a receives radio waves via the first antenna 6 from an artificial satellite included in a positioning system typified by the Global Positioning System (GPS). and then outputs positional information Indicative of the current position of the mobile unit to the interface 5. The autonomous navigation unit 5b typically includes an acceleration sensor for detecting an acceleration of the mobile unit and an angular velocity sensor for detecting an angular velocity of the mobile unit. The autonomous navigation unit 5b outputs acceleration information Indicative of the detected acceleration and angular velocity information indicative of the detected angular velocity to the interface 5. The interface 5 transfers the received positional information, acceleration information, and angular velocity information to the CPU 1.

The storage unit 7 typically includes a recording medium 7a typified by a DVD-ROM, and a drive unit 7b which drives the recording medium 7a. The recording medium 7a has recorded thereon cartographic data necessary for navigation. The drive unit 7b reads the cartographic data as required, and then transfers the read cartographic data to the RAM 9.

The ROM 8 stores at least a computer program 8a which defines the operation of the navigation device.

The RAM 9 stores information transferred from each component of the navigation device and, as required, deletes such information.

The audio output control unit 10 controls audio outputs to the loudspeaker 11.

The bus line 12 communicably connects the components of the navigation device to each other.

The VICS unit 13 has connected thereto the FM receiver 13a and/or the beacon receiver 13b. The FM receiver 13a receives traffic information indicative of the state of traffic on roads at predetermined intervals (for example, five minutes) via the second antenna 14a, and then outputs the received traffic information to the VICS unit 13. The beacon receiver 13b receives traffic information transmitted from beacons placed on the roads via the third antenna 14b, and then outputs the received traffic information to the VICS unit 13. The VICS unit 13 processes the traffic information received by the FM receiver 13a and/or the beacon receiver 13b, and then transfers the process results to the RAM 9.

The modem 15 has connected thereto a cellular phone 16. The modem 15 sends information generated by the CPU 1 via the cellular phone 16 to an external network (not shown), and transfers information transmitted via the network to the RAM 9.

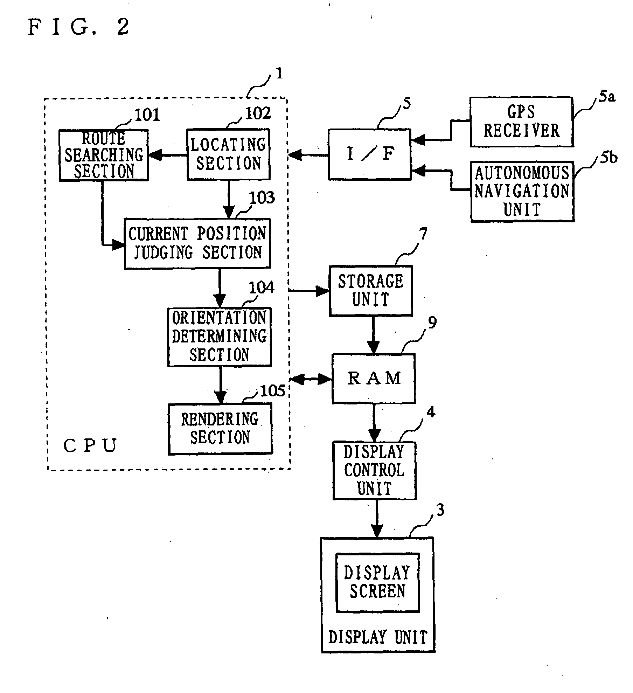

FIG. 2 is a block diagram illustrating main functions of the navigation device illustrated in FIG. 1. In FIG. 2, the main functions are achieved by the CPU 1 executing the computer program 8a. The navigation device includes a route searching section 101, a locating section 102, a current position judging section 103, an orientation determining section 104, and a rendering section 105.

The route searching section 101 derives a recommended route from a starting point to a destination point, both points having been set by the user operating the input unit 2, with the use of the cartographic data read in the RAM 9, and then stores data representing the recommended route in the RAM 9. Alternatively, the route searching section 101 may use the current position derived by the locating section 102, which will be described below, as the starting point.

The locating section 102 periodically derives the current position of the mobile unit. Specifically, if radio waves from the artificial satellite of the GPS are receivable, the locating section 102 obtains positional information including the current position of the mobile unit from the GPS receiver 5a. If such radio waves are not receivable, the locating section 102 uses the acceleration information and the angular velocity information from the autonomous navigation unit 5b to derive the current position of the mobile unit.

The current position judging section 103 judges whether the current position derived by the locating section 102 is on the recommended route represented by the data stored in the RAM 9. That is, the current position judging section 103 judges whether the mobile unit is moving along the recommended route.

If the current position judging section 103 judges that the mobile unit is on the recommended route, the orientation determining section 104 selects a plurality of points on the recommended route. Based on the selected points, the orientation determining section 104 then calculates a vector which determines a display orientation of the recommended route. By way of example, the orientation determining section 104 calculates average values (hereinafter referred to as average coordinate values) of coordinate values of all or part of the selected points. A point identified by the average coordinate values is taken as an end point defining the display orientation vector. Then, the orientation determining section 104 determines the display orientation so that the end point defining the display orientation vector is rotated to a point on the screen directly above the current position of the mobile unit. Furthermore, the orientation determining section 104 rotates points which constitute the cartographic data and recommended route data stored in the RAM 9 so that the points constituting the recommended route are distributed around the determined display orientation.

With the use of the rotated points which constitute the cartographic data and recommended route data stored in the RAM 9, the rendering section 105 generates a map image having overlaid thereon the recommended route, and then stores the map image in the RAM 9. The rendering section 105 then transfers the generated map image to the display control unit 4. As a result, the screen of the display unit 3 has displayed thereon a map in which the end point defining the display orientation vector is located directly above the current position of the mobile unit.

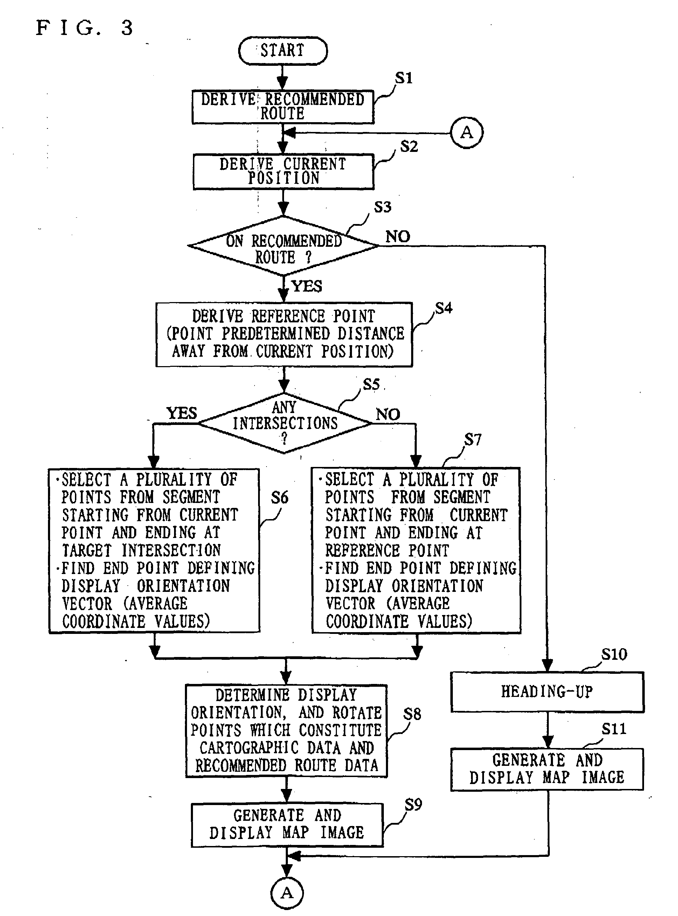

With reference to FIG. 3, the operation of the navigation device illustrated in FIGS. 1 and 2 is described in detail below. FIG. 3 is a flowchart showing in detail the operation of the navigation device. In FIG. 3, the route searching section 101 derives a recommended route in the above -described manner (step S1). Then, the locating section 102 derives the current position of the mobile unit in the above-described manner (step S2). Then, the current position judging section 103 judges in the above-described manner whether the mobile unit is moving along the recommended route (step S3).

If it is determined in step S3 that the mobile unit is moving along the recommended route, the orientation determining section 104 derives, based on the scale of the map image to be displayed on the display unit 3 and the size of the screen, a point which is a predetermined distance away from the current position and is also on the recommended route (step S4). Such a point is hereinafter referred to as a reference point. Here, on the screen of the display unit 3, a display position of the current position is generally fixed, and is, for example, a position directly and slightly above the center of the lower side of the screen. In this case, the predetermined distance is substantially equal to a value obtained by dividing the vertical length of the screen by the scale of the map. With the predetermined distance being varied based on the scale of the map, the navigation device can provide the user with a recommended route that is easier to visually recognize based on the scale.

With the cartographic data and the recommended route data stored in the RAM 9, the orientation determining section 104 determines whether there are any intersections at which the mobile unit should turn located in a segment starting from the current position and ending at the reference point on the recommended route (step S5). If it is determined that there are any such intersections, the orientation determining section 104 selects a plurality of points on the recommended route that are located in a segment starting from the current position and ending at an intersection at which the mobile unit should turn first (hereinafter referred to as a target intersection) and then finds coordinate values of each selected point. The orientation determining section 104 then calculates a total coordinate value for each coordinate components, and then divides each total coordinate value by the total number of selected points, thereby obtaining average coordinate values, which are an exemplary representation of the end point defining the display orientation vector (step S6). What is particularly important in navigation is to guide the mobile unit to an intersection at which the mobile unit should turn next. That is, the navigation device preferably provides the user with a segment ending at the next intersection at which the user should turn on the recommended road so that the segment is easy for the user to visually recognize. To achieve this, as in step S6, a plurality of points on the recommended route are selected from a segment starting from the current position and ending at the target intersection.

If it is determined in step S5 that there are no intersections, the orientation determining section 104 selects a plurality of points on the recommended route that are located in a segment starting from the current position and ending at the reference point, and then finds average coordinate values of the coordinate values of the selected points in a manner similar to that described above (step S7).

Note that, in order to obtain balanced average values in steps S6 and S7, it is preferable that spaces between any adjacent two of the points selected by the orientation determining section be equal to each other along a direction from the current position to the reference point or the target intersection. This is not meant to be restrictive. As well known, the recommended route is structured by a plurality of nodes each representing a featured point on a road, typically a curvature point or an intersection. In general, these nodes each have coordinate values of the featured point assigned thereto. Therefore, the orientation determining section 104 may select a plurality of nodes from the recommended route data.

After step S6 or S7, the orientation determining section 104 determines the display orientation of the recommended route and the map so that the point identified by the average coordinate values calculated in either one of steps S6 and S7 is rotated to a point on the screen of the display unit 3 directly above the current position. Specifically, the orientation determining section 104 first derives an angle φ formed by a line in portrait orientation of the screen and a line joining the current position and the point identified by the average coordinate values, and then determines (-φ) as an amount of rotation **θ** of the map image. The orientation determining section 104 then rotates the points which constitute the cartographic data and the recommended route data stored in the RAM 9 by the obtained amount of rotation θ (step S8).

Next, the use of the rotated points which constitute the cartographic data and recommended route data, the rendering section 105 generates a map image having overlaid thereon the recommended route, and then stores the map image in the RAM 9. The rendering section 105 then transfers the map image stored in the RAM 9 to the display control unit 4. As a result, the screen of the display unit 3 has displayed thereon a map in which the point identified by the average coordinate values has been rotated to the point on the screen directly above the current position (step S9).

If it is judged in step S3 that the mobile unit is not moving along the recommended route, the orientation determining section 104 determines a direction of travel of the mobile unit as the map orientation in a manner similar to that of the known heading-up function (step S10). As a result, the display unit 3 has displayed thereon a map in which the direction of travel of the mobile unit is perpendicular to the upper side of the screen (step S11). With this, calculation of the amount of rotation θ is not required if unnecessary. Thus, the navigation device can efficiently display a map image.

After the above step S9 or S11, the processes in step S2 and the subsequent steps are repeated in the navigation device.

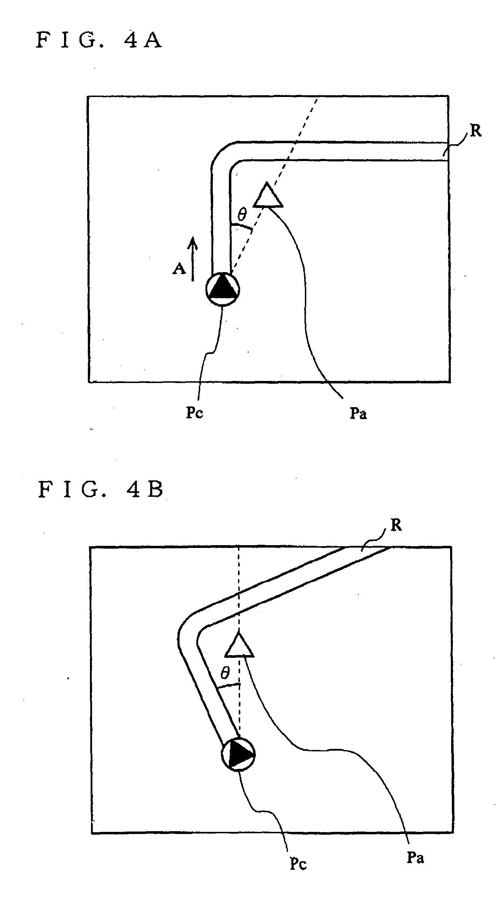

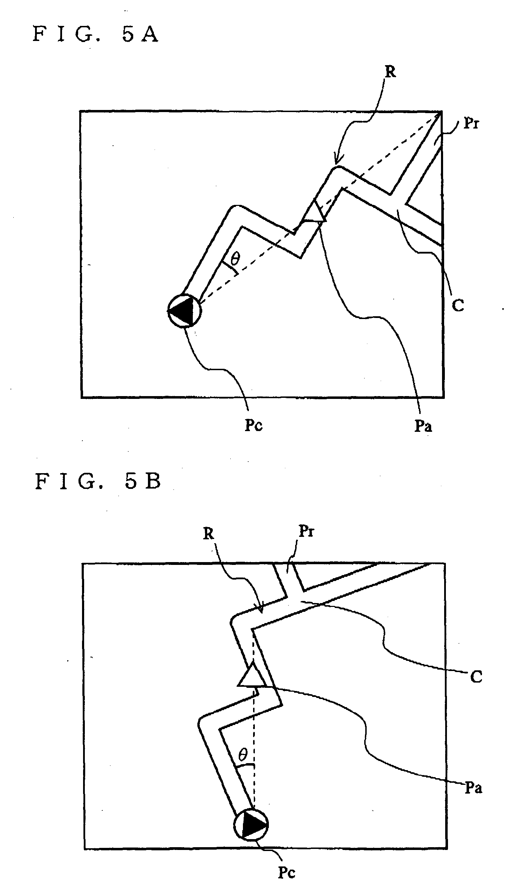

As described above, according to the present Invention, a map is generated in which a point identified by the average coordinate values of the points selected from the recommended route (the end point defining the display orientation vector) has been rotated to a point on the screen directly above the current position. Therefore, the navigation device can provide a map which makes it easy for the user to visually recognize the recommended route. With reference to FIGS. 4A, 4B, 5A, and 5B, technical effects of the present embodiment are described below. FIG. 4A is a schematic illustration showing an exemplary recommended route displayed in the conventional heading-up function, that is, in step S11. In FIG. 4A, the screen of the display unit 3 has displayed thereon at least a recommended route R and a current position Pc. Also, FIG. 4A illustrates, for reference purpose only. an arrow A indicative of a direction of travel of the mobile unit, a point Pa identified by the average coordinate values, a dotted line passing through the current position Pc and the point Pa identified by the average coordinate values, and the amount of rotation **θ.** As described above. according to the conventional heading -up function, the recommended route R is displayed so that the direction of the arrow A is perpendicular to the upper side of the screen.

FIG. 4B is a schematic illustration showing the recommended route displayed in step S9 on the display unit 3 under map orientation control performed by the present navigation device. In FIG. 4B, the screen of the display unit 3 has displayed thereon at least the recommended route R and the current position *Pc.* Also, FIG. 4B illustrates, for reference purpose only, a point Pa identified by the average coordinate values derived in step S8. the amount of rotation θ, and a dotted line passing through the current position Pc and perpendicular to the upper side of the screen.

Here, as illustrated in FIGS. 4A and 4B, consider a case in which the recommended route R has a sharp curve going right. In this case, according to the conventional heading-up function, as illustrated in FIG. 4A, portions following this sharp curve are displayed on a right region of the screen. By contrast, in step S8, an angle φ formed by the dotted line indicative of an upper direction of the screen and a line joining the current position Pc and the point Pa identified by the average coordinate values is first derived. Then, the recommended route R is rotated by the amount of rotation **θ** (= -φ) with reference to the current position as the rotation center. As a result, the portions following the sharp curve are displayed on an upper region of the screen. as illustrated in FIG. 4B.

As evident from the above with reference to FIGS. 4A and 4B. in step S9, portions following a segment in which the direction of travel sharply changes can be displayed on the upper region of the screen. Therefore, the navigation device can provide the user with a recommended route that is easy to visually recognize.

FIGS. 5A and 5B are schematic illustrations for describing technical effects of step S6 in FIG. 3. Here, consider a case in which the recommended route R has a target intersection C in a segment starting from the current position Pc and ending at a reference point Pr. In this case, the orientation determining section 104 first uses the points selected from the segment starting from the current position Pc and ending at the target intersection C to find average coordinate values identifying a point Pa. Then, the rendering section 105 generates, as illustrated in FIG. 5B, a map image in which the point Pa identified by the average coordinate values has been rotated to a point on the screen directly above the current position Pc. As such, the navigation device can provide the user with a segment starting from the current position Pc and ending at the target intersection C so that the segment is easy for the user to visually recognize.

In the above-described embodiment, descriptions have been made by taking the point identified by the average coordinate values as an example of the end point defining the display orientation vector. This is not meant to be restrictive. Alternatively, with the use of coordinate values of points selected from the recommended route, the orientation determining section 104 may calculate the barycenter of a segment starting from the current position and ending at the reference point or the target intersection, and then use the calculated barycenter as the end point defining the display orientation vector. Still alternatively, the orientation determining section 104 may approximate the segment starting from the current position and ending at the reference point or the target intersection to a straight line by using coordinate values of points selected from the segment, and then use the orientation of the straight line as the display orientation.

Still alternatively, the orientation determining section 104 may derive lines joining the current position and points selected from the segment starting from the current position and ending at the reference point or the target intersection. Then, the orientation determining section 104 may calculate an average value of angles formed by the derived lines with respect to a predetermined reference line, and then use the orientation of the calculated average angle as the display orientation. Note that the orientation of the average angle is substantially identical to the orientation of a line joining the current position and the point identified by the average coordinate values.

Further, in the present embodiment, the point identified by the average coordinate values is rotated to a point on the screen directly above the current position. This is not meant to be restrictive. The point identified by the average coordinate values can be rotated to a point located on a line joining the current position and a comer of the screen of the display unit 3.

While the invention has been described in detail, the foregoing description is in all aspects illustrative and not restrictive. It is understood that numerous other modifications and variations can be devised without departing from the scope of the invention. '

## Claims

1. A navigation device which displays a recommended route from a starting point to a destination point of a mobile unit, comprising:
a route searching section (101) for deriving the recommended route;
a locating section (102) for deriving a current position of the mobile unit;
an orientation determining section (104) for selecting, on the recommended route, a plurality of points from a segment starting from the current position derived by the locating section and ending at a point which is a predetermined distance away from the current position, and determining, by using the selected points, a vector which determines a display orientation of the recommended route;
a rendering section (105) for generating a map image having overlaid thereon the recommended route in accordance with the display orientation determined by the orientation determining section; and
a display section (3) for displaying a map image generated by the rendering section on a screen included in the display section.

2. The navigation device according to claim 1. wherein
the orientation determining section calculates an end point defining the display orientation vector by using the selected points. and then determines an orientation starting from the current position derived by the locating section toward the calculated end point as the display orientation of the recommended route.

3. The navigation device according to claim 2, wherein
the orientation determining section calculates average coordinate values of the selected points as identifying the end point defining the display orientation vector.

4. The navigation device according to claim 2, wherein
the orientation determining section calculates a barycenter of the recommended route from coordinate values of the selected points as the end point defining the display orientation vector.

5. The navigation device according to claim 1, wherein
the orientation determining section approximates the recommended route to a straight line by using coordinate values of the selected points, and then determines an orientation of the straight line as the display orientation.

6. The navigation device according to claim 1, wherein
the rendering section generates a map image in which the display orientation determined by the orientation determining section is toward an upper side of the screen included in the display section.

7. The navigation device according to claim 1, wherein
the predetermined distance is determined based on a scale of the map image.

8. The navigation device according to claim 7. wherein
if an intersection is located between the current position derived by the locating section and the point which is the predetermined distance away from the current point, the orientation determining section selects, on the recommended route, a plurality of points from a segment starting from the current point and ending at the intersection.

9. The navigation device according to claim 1, wherein
spaces between any adjacent two of the points selected by the orientation determining section are equal to each other.

10. The navigation device according to claim 1, further comprising a current position judging section (103) for judging whether the mobile unit is located on the recommended route, wherein
upon judgment made by the current position judging section that the mobile unit is not located on the recommended route, the orientation determining section determines a direction of travel of the mobile unit as the display orientation.

11. A method of displaying a recommended route from a start:Lngpoint to a destination point of a mobile unit, comprising
a route searching step (S1 of deriving the recommended route:
a locating step (S2) of deriving a current position of the mobile unit;
an orientation determining step (S8) of selecting, on the recommended route, a plurality of points froma segment starting from the current position derived in the locating step and ending at a point which is a predetermined distance away from the current point, and determining, by using the selected points, a vector which determines a display orientation of the recommended route:
a rendering step (S9) of generating a map image having overlaid thereon the recommended route in accordance with the display orientation determined in the orientation determining step: and
a displaying step (S9) of displaying the map image generated in the rendering step on a screen.

12. A computer program for generating a map image having overlaid thereon a recommended route from a starting point to a destination point of a mobile unit. the computer program causing a computer to execute:
a route searching step (S1) of deriving the recommended route;
a locating step (S2) of deriving a current position of the mobile unit;
an orientation determining step (S8) of selecting, on the recommended route, a plurality of points from a segment starting from the current position derived in the locating step and ending at a point which is a predetermined distance away from the current point, and determining, by using the selected points, a vector which determine a display orientation of the recommended route; and
a rendering step (S9) of generating a map image having overlaid thereon the recommended route in accordance with the display orientation determined in the orientation determining step.

13. The computer program according to claim 12. wherein the computer program is recorded on a recording medium.
